**Europäisches Patentamt**

**European Patent Office**

**Office européen des brevets**

(19)

(11) **EP 0 901 609 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.$^7$: **G01C 17/30**, G01C 17/38, G01C 21/20, G01C 25/00

(21) Anmeldenummer: **98909395.0**

(22) Anmeldetag: **05.02.1998**

(86) Internationale Anmeldenummer:
**PCT/EP1998/000627**

(87) Internationale Veröffentlichungsnummer:
**WO 1998/035206 (13.08.1998 Gazette 1998/32)**

(54) **VERFAHREN ZUM BESTIMMEN VON KORREKTURPARAMETERN**

METHOD AND DEVICE FOR DETERMINING CORRECTION PARAMETERS

PROCEDE DE DETERMINATION DE PARAMETRES DE CORRECTION

(84) Benannte Vertragsstaaten:
**AT CH DE FI FR GB IT LI NL SE**

(30) Priorität: **10.02.1997 DE 19704853**

(43) Veröffentlichungstag der Anmeldung:
**17.03.1999 Patentblatt 1999/11**

(73) Patentinhaber: **Leica Geosystems AG
9435 Heerbrugg (CH)**

(72) Erfinder:
 • **NACHBAUR, Peter
 A-6807 Feldkirch (AT)**
 • **GNEPF Silvio
 CH-9435 Heerbrugg (CH)**
 • **DITTRICH, Frank
 CH-9445 Rebstein (CH)**

(74) Vertreter: **Stamer, Harald
 Postfach 26 04
 35536 Wetzlar (DE)**

(56) Entgegenhaltungen:
 **EP-A- 0 161 668       EP-A- 0 392 448
 WO-A-91/07639        DE-A- 2 937 426**

**Beschreibung**

Die Erfindung betrifft ein Verfahren zum Bestimmen von Korrekturparametern entsprechend dem Oberbegriff des Anspruchs 1.

Bei der Navigation eines Landfahrzeuges mittels elektronischem Kompaß zur Azimutanzeige, Neigungsmesser zur Elevations- oder Höhenanzeige und Odometer zur Entfernungsanzeige entstehen Fehler in der berechneten Position. Die Gründe dafür sind

-    der Unterschied zwischen magnetisch Nord und Kartennord der jeweils für die Navigation verwendeten Karte,

-    der geometrische Unterschied zwischen Montagerichtung des Kompasses oder Neigungsmessers und der Fahrzeugfahrtrichtung,

-    weich- und hartmagnetische Einflüsse des Fahrzeugs auf den Kompaß und

-    Skalierungsfehler bei der Streckenmessung mittels Odometer.

Für die Navigation wird die Fahrzeugfahrtrichtung, ausgedrückt in Koordinaten des Karten-Nordsystems gebraucht, welches gegenüber dem magnetischen Nordsystem zusätzlich horizontal um die Deklination verdreht ist. Die Deklination kann aus Tabellen entnommen werden. Ihr ist jedoch zusätzlich eine Verdrehung des Kompaß-Koordinatensystems gegenüber der Fahrzeugfahrtrichtung überlagert, deren Richtung nicht bekannt ist.

Bei einem Landfahrzeug ist die Fahrzeugfahrtrichtung nicht durch geometrische oder optische Konstruktion bezüglich des Fahrzeugchassis von vornherein gegeben oder nach Herstellerangaben leicht berechenbar. Sie kann nur empirisch aus dem Unterschied zwischen tatsächlicher und berechneter Fahrtrichtung bestimmt werden.

Aus DE 41 25 369 A1 ist eine auf einem Motor-Fahrzeug montierte Navigationseinrichtung bekannt, die als Azimutsensor einen Erdmagnetismus-Sensor enthält. Zur Kompensation von Fehlanzeigen dieses Sensors aufgrund von Einflüssen einer magnetischen Umgebung ist ein Vergleich mit zusätzlich gewonnenen GPS-Navigationsdaten vorgesehen. Damit kann jedoch nur eine Nullpunktverschiebung des Koordinatensystems korrigiert werden.

Aus EP 0 392 448 A1 ist ein Verfahren zur Ermittlung eines Einbau-Winkelfehlers bei einem zur Richtungsbestimmung in ein Fahrzeug eingebauten Magnetfeldsensor bekannt. Bei dem Verfahren wird die Differenz aus einem gemessenen Istwert der Richtung und einem aus bekannten Ortsdaten ermittelten Sollwert für die Richtung gebildet. Aus verschiedenen Testfahrten werden Mittelwerte der Richtungsabweichung gewonnen und der Gesamt-Mittelwert als Drehfehler zur Korrektur der Richtungsmessung verwendet.

In DE 31 41 439 A1 wird eine Azimut-Ermittlungsvorrichtung angegeben, bei der das Fahrzeug mit dem auf ihm montierten Azimutsensor nach exakt Norden und Osten ausgerichtet wird. Die dabei festgestellte Abweichung von Zweikomponenten-Meßsignalen des Azimutsensors gegenüber der vorgegebenen Ausrichtung wird durch Einstellen der Meßsignale mit einer Einstellschaltung kompensiert. Eine auf dem Restmagnetismus des Azimutsensors beruhende Verfälschung der Ausgangssignale wird somit ebenfalls durch Nullpunktverschiebung korrigiert.

Die Einflüsse einer zur Fahrtrichtung fehlerhaften Ausrichtung eines Magnetkompasses und von hart- und weichmagnetischen Feldern auf die Anzeigegenauigkeit sind aus der Schiffahrt bekannt. Zur Kompensation der Deviation des Kompasses werden Koeffizienten A, B, C, D, E definiert und jeweils gesondert bestimmt. Dabei berücksichtigt A eine konstante Fehlanzeige z. B. durch eine zur Schiffslängsrichtung verdrehte Aufstellung des Kompasses, B den Einfluß des Längsschiffsmagnetismus, C den Einfluß des Querschiffsmagnetismus, D den Einfluß eines in Weicheisenteile induzierten Magnetismus und E eine Unsymmetrie der Verteilung von Eisenmassen im Schiffskörper (A. Heine, Kompaß ABC, Verlag Klasing + Co., (1983), Seiten 43 bis 45). Da die Einflüsse D und E im allgemeinen klein sind, werden ihre Koeffizienten im allgemeinen vernachlässigt.

Zur Bestimmung der Koeffizienten wird das Schiff auf bekannten Kursen nach Nord, Ost, Süd und West gehalten und die jeweilige Abweichung der Kompaßanzeige gegenüber den bekannten Kursen abgelesen. Die einzelnen Koeffizienten werden durch Mittelung der Deviationswerte gegenüber ausgewählten Kursen errechnet.

Die bei der Landnavigation durch ungenaue Streckenmessung und durch Bergfahrten entstehenden Strecken-Abweichungen gegenüber den auf der Karte eingetragenen Entfernungen spielen in der Schiffahrt keine Rolle. Für eine autonome Navigation von Landfahrzeugen ist es aber notwendig, diese zusätzlich zum Magnetkompaß für die Richtungsmessung auch mit einem Odometer für die Streckenmessung und einem Neigungsmesser auszurüsten, um die bei einer Berg- oder Talfahrt gemessenen Strecken in die der Kartenebene entsprechenden Werte umrechnen zu können.

Zur Kalibration der Kompaßanzeige sind üblicherweise Kreisfahrten und Meßwertaufnahmen in mehreren definierten Winkelstellungen zum Kreismittelpunkt vorzunehmen. Teilweise wird auch eine Korrektur der magnetischen Richtungsanzeige für die Horizontebene mit Hilfe von Neigungssensoren vorgenommen. Bei einem von der Fa. Leica AG, Heerbrugg, Schweiz, hergestellten Digitalmagnetischem Kompaß (DMC) sind neben drei Magnetfeldsensoren für die drei Raumkoordinaten auch zwei Neigungssensoren für Elevation und Bank integriert. Die Streckenmessung und die sich daraus zusammen mit der Richtungsmessung ergebende Position des Fahrzeugs kann mit Hilfe von unabhängig gewonnenen Satelliten-Navigationssignalen (GPS) überprüft und ggfl. korrigiert werden. Die Richtungsmessung, die Streckenmessung und die Positionsmessung werden als voneinander unabhängige Systeme behandelt (Informationsschrift der Fa. KVH Industries, Inc, USA, (1995), TACNAV System).

Der Erfindung liegt die Aufgabe zugrunde, ein einfach anzuwendendes Verfahren anzugeben, mit dem bei einem Landfahrzeug Korrekturwerte für die Anzeigen der eingebauten Meßgeräte für Azimut, Elevation und Strecke ermittelt werden können, so daß eine wesentlich gesteigerte Genauigkeit in der Navigation erreicht wird und auf eine GPS-Überprüfung verzichtet werden kann.

Diese Aufgabe wird erfindungsgemäß durch die im kennzeichnenden Teil des Anspruchs 1 angegebenen Merkmale gelöst. Für die Auswertung besonders vorteilhaft ist es, wenn eine Hin- und Rückfahrt zwischen zwei mit ihren geografischen Koordinaten bekannten Punkten durchgeführt wird.

In der Zeichnung ist die Fahrzeugfahrtrichtung als Vektor gegenüber der Horizontalebene = Kartenebene dargestellt, wobei

Fig. 1 Azimut und Elevation veranschaulicht und

Fig. 2 den Einfluß eines Azimutfehlers auf die Elevationsanzeige darstellt.

Die Erfindung wird nachfolgend beispielhaft beschrieben, wobei Azimutmessung und Elevationsmessung in einem miteinander gekoppelten System (DMC) durchgeführt werden.

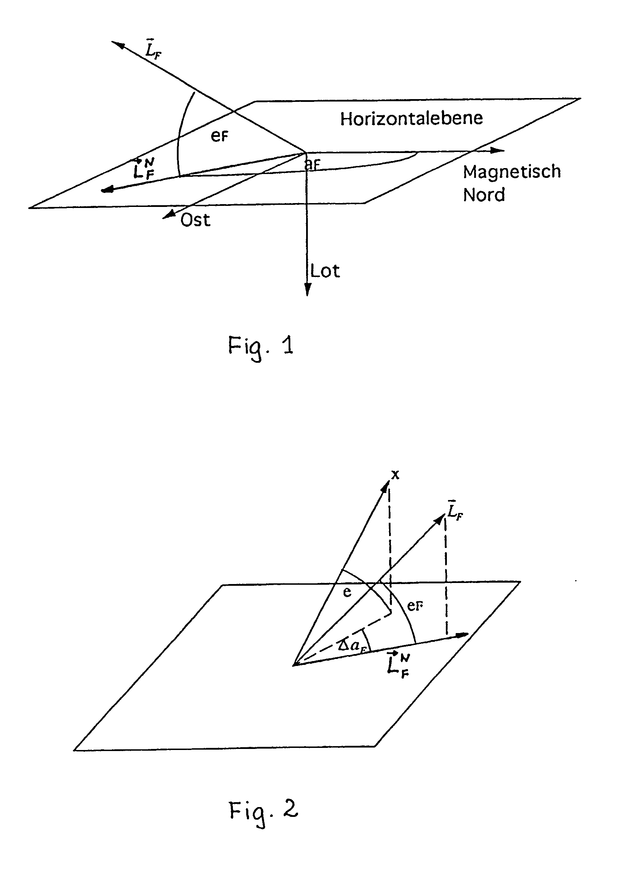

Ausgehend von den Werten für Azimut und Elevation wird die Fahrzeugfahrtrichtung $\vec{L}_F^N$ als Einheitsvektor in der Horizontalebene dargestellt und auf Magnetisch Nord bezogen. Fig.1 veranschaulicht die Zusammenhänge, wobei mit $e_F$ der Elevationswinkel zwischen der tatsächlichen Fahrzeugfahrtrichtung $\vec{L}_F$ und der Horizontalebene und mit $a_F$ der Azimutwinkel zwischen Magnetisch Nord und Projektion von $\vec{L}_F$ auf die Horizontalebene bezeichnet sind. Durch Multiplikation mit der gefahrenen Strecke $s_F$ ergibt sich in allgemeiner Darstellung die Position in der Horizontalebene zu

$$s_F \cdot \vec{L}_F^N = s_F \begin{pmatrix} \cos e_F \cdot \cos a_F \\ \cos e_F \cdot \sin a_F \\ \sin e_F \end{pmatrix}$$

In der Praxis wird die erreichte Position ausgehend von einem Startpunkt durch Aneinanderreihung von vielen Zwischenwerten $\vec{L}_j$, $s_j$; j=1...N ermittelt. In der Schiffahrt ist dieses Verfahren als Koppelnavigation bekannt. Es gilt also unter Weglassung der Indizes N und F für die erreichte Position entlang der Fahrzeugfahrtrichtung in der Horizontalebene

$$\int_0^s \vec{L}\, ds \approx \sum_{j=1}^N \vec{L}_j \cdot s_j = \sum_{j=1}^N \begin{pmatrix} \cos e_j \cdot \cos a_j \\ \cos e_j \cdot \sin a_j \\ \sin e_j \end{pmatrix} \cdot s_j$$

Andere Formen einer angenäherten Integration sind möglich und liegen im Rahmen fachmännischen Könnens.

Unter der Voraussetzung, daß korrekte Werte für Elevation e, Azimut a und Wegstrecke s zur Verfügung stehen und der Startpunkt bekannt ist, kann durch Auswertung der angegebenen Summe eine genaue Positionsangabe erfolgen, bzw. durch Eingabe von aus der Karte entnommenen Werten für a und s eine genaue Navigation erfolgen. Tatsächlich sind die von den Meßgeräten angegebenen Werte jedoch verfälscht, wie eingangs erwähnt und in Fig.2 dargestellt.

Gemessen werden Elevation e und Azimut a in dem Koordinatensystem des DMC. Seine x-Achse soll der Fahrzeugfahrtrichtung entsprechen. Fig.2 zeigt die Azimutverschiebung $\Delta a_F$ der Projektion der Fahrzeugfahrtrichtung $\vec{L}_F$ gegenüber der Projektion der x-Achse und den Unterschied der Elevation e der x-Achse gegenüber der Elevation $e_F$ in der Fahrzeugfahrtrichtung.

Erfindungsgemäß werden die Meßwerte a, e, s durch korrigierte Werte a', e', s' nach folgender Vorgabe ersetzt:

$$a' = a + A + B \cdot \sin a + C \cdot \cos a$$

$$e' = e - A_2$$

$$s' = \rho \cdot s$$

Dabei berücksichtigen die Parameter

A       die Deklination gegenüber Magnetisch Nord und einen Kompaßmontagefehler in Azimut,
B, C    einen hart- und weichmagnetischen Fahrzeugmagnetismus,
$A_2$     einen Montagefehler des Neigungsmessers in Elevation und
$\rho$       einen Maßstabfehler des Odometers.

Die unbekannten Korrekturparameter werden erfindungsgemäß in zwei visuell navigierten Testfahrten ermittelt, bei denen die korrekten Werte a', e' und s' zwischen Start- und Zielposition bekannt sind und die aktuellen Werte a, e, s gemessen werden. Bei jeder Testfahrt ergeben sich ausreichend viele unabhängige Bestimmungsgleichungen entsprechend den Meßwerten für die drei Raumkoordinaten x, y, z, so daß die Korrekturparameter eindeutig bestimmbar sind und bei späteren instrumentellen Navigationsfahrten im Meßsystem berücksichtigt werden können.

Besonders vorteilhaft ist es, bei den beiden Testfahrten einfach eine Richtungsumkehr durchzuführen. Es brauchen dann nur zwei Punkte mit ihren geografischen Koordinaten bekannt zu sein und die tatsächliche Wegdifferenz ist gleich Null, so daß sich das System der Bestimmungsgleichungen vereinfacht.

Bei Einsatz eines Fahrzeugs nur in der Ebene kann auf die Verwendung von Neigungsmessern verzichtet werden. Damit verringert sich die Anzahl der Korrekturparameter und auch die Lösung der Bestimmungsgleichungen wird vereinfacht. Diese Spezialisierung führt ersichtlich nicht aus dem Erfindungsgedanken heraus. Wesentlich ist die Erkenntnis, den korrigierten Azimut in der angegeben Form beschreiben zu können und im einfachsten Fall mit zwei Testfahrten zwischen zwei bekannten Punkten alle notwendigen Korrekturparameter ermitteln zu können.

**Patentansprüche**

1. Verfahren zum Bestimmen von Korrekturparametern für die Meßwerte eines für Navigationszwecke in ein Landfahrzeug eingebauten, den Azimut a der Fahrzeugfahrtrichtung angebenden Magnetkompasses, eines die Elevation e der Fahrzeugfahrtrichtung gegen den Horizont angebenden Neigungsmessers und eines die gefahrene Strecke s angebenden Odometers, wobei der momentane Richtungsvektor des Fahrzeugs gegeben ist durch

$$\int_0^s \vec{L} \, ds \approx \sum_{j=1}^N \vec{L}_j \cdot s_j = \sum_{j=1}^N \begin{pmatrix} \cos e_j \cdot \cos a_j \\ \cos e_j \cdot \sin a_j \\ \sin e_j \end{pmatrix} \cdot s_j$$

mit $L_j$ = Fahrzeugfahrtrichtung in der Horizontalebene und $s_j$ = Wegintervall zwischen zwei Meßzeitpunkten j und j-1, **dadurch gekennzeichnet, daß** eine erste Testfahrt unter visueller Navigation von einem mit seinen geografischen Koordinaten bekannten Startpunkt zu einem ebenfalls mit seinen geografischen Koordinaten bekannten Zielpunkt durchgeführt wird, daß
eine anschließende Testfahrt mit Richtungsänderung unter visueller Navigation zu einem zweiten, mit seinen geografischen Koordinaten bekannten Zielpunkt durchgeführt wird, daß
während der Testfahrten zu Zeitpunkten $t_j$; j=1...N, die Meßwerte $a_j$, $e_j$, $s_j$ aufgenommen und aus den bekannten Start- und Zielpunkt-Koordinaten die entsprechenden Werte $a'_j$, $e'_j$, $s'_j$ errechnet werden, und daß die errechneten Richtungsvektoren mit den durch Messung ermittelten Richtungsvektoren entsprechend

$$a' = a + A + B \cdot \sin a + C \cdot \cos a$$

$$e' = e - A_2$$

$$s' = \rho \cdot s$$

in Beziehung gesetzt und daraus die Korrekturparameter

A      für Deklination und Kompaßmontagefehler in Azimut,
B,C    für hart- und weichmagnetischen Fahrzeugmagnetismus,
$A_2$     für Montagefehler des Neigungsmessers in Elevation und
$\rho$      für einen Maßstabfehler des Odometers

ermittelt werden.

2.   Verfahren nach Anspruch 1, **dadurch gekennzeichnet, daß** die zweite Testfahrt vom ersten Zielpunkt zurück zum Startpunkt erfolgt.

**Claims**

1.   Method for determining correction parameters for the measured values of a magnetic compass installed for navigation purposes in a land vehicle and indicating the azimuth a of the direction of travel of the vehicle, of an inclination meter indicating the elevation e of the direction of travel of the vehicle relative to the horizon, and of an odometer indicating the distance s travelled, the instantaneous direction vector of the vehicle being given by

$$\int_0^s \overline{L}\,ds \approx \sum_{j=1}^{N} \overline{L}_j \cdot s_j = \sum_{j=1}^{N} \begin{pmatrix} \cos e_j \cdot \cos a_j \\ \cos e_j \cdot \sin a_j \\ \sin e_j \end{pmatrix} \cdot s_j$$

with $L_j$ = direction of travel of the vehicle in the horizontal plane and $s_j$ = distance interval between two measuring times j and j-1, **characterized in that** a first test drive is carried out with visual navigation from a starting point known with its geographic coordinates to a destination point likewise known with its geographic coordinates, **in that** a subsequent test drive with change of direction with visual navigation to a second destination point known with its geographic coordinates is carried out, that
during the test drives, at times $t_j$; j=1...N, the measured values $a_j$, $e_j$, $s_j$ are recorded and the corresponding values $a'_j$, $e'_j$, $s'_j$ are calculated from the known coordinates of the starting point and of the destination, and that
the calculated direction vectors are related to the direction vectors determined by measurement, in accordance with

$$a' = a + A + B \cdot \sin a + C \cdot \cos a$$

$$e' = e - A_2$$

$$s' = \rho \cdot s$$

and the correction parameters

A     for the declination and compass mounting error in the azimuth,
B, C    for the magnetically hard and magnetically soft vehicle magnetism,
$A_2$    for mounting errors of the inclination meter in elevation and
ρ    for a scale error of the odometer

are determined therefrom.

**2.** Method according to Claim 1, **characterized in that** the second test drive is effected from the first destination back to the starting point.

**Revendications**

**1.** Procédé de détermination de paramètres de correction pour des valeurs de mesure d'un compas magnétique, incorporé à des fins de navigation dans un véhicule terrestre, indiquant l'azimut a de la direction de roulage du véhicule, d'un indicateur d'inclinaison, indiquant l'élévation e de la direction de roulage du véhicule par rapport à l'horizon, et d'un odomètre, indiquant la distance s parcourue, le vecteur directionnel momentané du véhicule étant fourni par :

$$\int_0^s \overline{L}\ ds\ \approx\ \sum_{j=1}^{N} \overline{L}_j.\ s_j\ =\ \sum_{j=1}^{N} \begin{pmatrix} \cos\ e_j\ .\ \cos\ a_j \\ \cos\ e_j\ .\ \sin\ a_j \\ \sin\ e_j \end{pmatrix}\ .\ s_j$$

avec $L_j$ = direction de roulage du véhicule dans le plan horizontal, et $s_j$ = intervalle de déplacement entre deux instants de mesure j et j-1, **caractérisé en ce qu'**un premier roulage d'essai est effectué sous la navigation visuelle depuis un point de départ, connu quant à ses coordonnées géographiques, jusqu'à un point de destination, également connu par ses coordonnées géographiques,
**en ce qu'**
un roulage d'essai subséquent, avec modification de la direction sous navigation visuelle, vers un deuxième point de destination, connu par ses coordonnées géographiques, est effectué, **en ce que**,
pendant le roulage d'essai, à des instants $t_j$:j=1...N, les valeurs de mesure $a_j$, $e_j$, $s_j$ sont enregistrées et les valeurs a'j, e'j, s'j correspondantes sont calculées à partir des coordonnées de départ et de destination connues, et **en ce que** les vecteurs directionnels calculés sont mis en relation avec les vecteurs directionnels déterminés par mesure, de manière correspondant à :

$$a' = a + A + B \cdot \sin a + C \cdot \cos a$$

$$e' = e - A_2$$

$$s' = \rho \cdot s$$

et, à partir de cela, les paramètres de correction

A     pour la déclinaison et l'erreur de montage de compas en azimut,
B,C    pour le magnétisme, magnétiquement fort et doux, du véhicule,
$A_2$    pour des erreurs de montage du capteur d'inclinaison en élévation, et
ρ    pour une erreur d'échelle de l'odomètre,

sont déterminés.

2. Procédé selon la revendication 1, **caractérisé en ce que** le deuxième roulage d'essai est effectué depuis le premier point de destination, en revenant au point de départ.

Fig. 1

Fig. 2